(19) Europäisches Patentamt
European Patent Office
Office européen des brevets

(11) **EP 2 028 024 B1**

(12) **EUROPEAN PATENT SPECIFICATION**

(45) Date of publication and mention
of the grant of the patent:
**25.01.2012 Bulletin 2012/04**

(51) Int Cl.:
***B60C 11/02*** *(2006.01)*     ***B60C 11/00*** *(2006.01)*
***B60C 11/04*** *(2006.01)*

(21) Application number: **07767087.5**

(22) Date of filing: **08.06.2007**

(86) International application number:
**PCT/JP2007/061668**

(87) International publication number:
**WO 2007/145150 (21.12.2007 Gazette 2007/51)**

(54) **PRECURED TREAD AND RETREADED TIRE**

VORGEHÄRTETES REIFENPROFIL UND RUNDERNEUERTER REIFEN

BANDE DE ROULEMENT PRÉCUITE ET PNEUMATIQUE RECHAPÉ

(84) Designated Contracting States:
**DE ES FR GB IT**

(30) Priority: **15.06.2006   JP 2006166356**

(43) Date of publication of application:
**25.02.2009   Bulletin 2009/09**

(73) Proprietor: **Bridgestone Corporation
Tokyo 104-8340 (JP)**

(72) Inventors:
• **GOTO, Naoyuki
Kodaira-shi, Tokyo 187-8531 (JP)**
• **KUKIMOTO, Takashi
Kodaira-shi, Tokyo 187-8531 (JP)**
• **YOSHIDA, Go
Kodaira-shi, Tokyo 187-8531 (JP)**

(74) Representative: **Whalley, Kevin
Marks & Clerk LLP
90 Long Acre
London WC2E 9RA (GB)**

(56) References cited:
JP-A- 01 317 807     JP-A- 03 096 407
JP-A- 03 153 406     JP-A- 04 113 905

**Description**

TECHNICAL FIELD

The present invention relates to a precure tread and a retreaded tire using same, the precure tread having a circumferential groove extending in a circumferential direction of the tire on a front surface which is to be a ground contact surface of the tire and a rear surface groove extending in the circumferential direction of the tire on a rear surface which is to be attached to a base tire, the rear surface groove appearing from a tread surface as wear of the tread surface is progressed. The present invention particularly aims to effectively prevent the precure tread from being peeled off from the base tire without degrading the wet performance from the beginning to the end of wear life of the tire.

RELATED ART

A retreaded tire is well known as recycling of a tire. The retreaded tire is formed in such a manner that a tread alone or a tread along with a part of belt layer is removed from a used tire to form a base tire, and then a tread made of new material is reattached to the base tire. As a manufacturing method of a retreaded tire, there are proposed a method in which a base tire and a green tread rubber are joined with each other and then vulcanized in a mold and a method in which a tread rubber is preliminarily vulcanized and patterned in a long mold to form a precure tread and the thus-formed precure tread is attached to a base tire through vulcanization at relatively low temperature and at low pressure on the attaching plane (for example, refer to JP-A-H10-119054).

As is the case with a new tire, a retreaded tire is provided with a plurality of circumferential grooves on a tread portion which is to be a ground contact surface in order to ensure the wet performance. However, when wear of the tread surface is progressed, the groove depth and the groove area of the circumferential grooves are reduced, which inevitably results in degradation of the wet performance. In order to suppress such degradation of the wet performance, there is proposed a precure tread having a circumferential groove extending in a circumferential direction of a tire on a front surface and a rear surface groove extending in the circumferential direction of the tire on a rear surface which is to be attached to a base tire (for example, refer to JP-A-H1-317807). In the tire using this precure tread, when wear of the tread portion is progressed and groove volume of the front groove is reduced, the rear groove appears from a tread surface, which is capable of preventing degradation of the wet performance to some extent. In addition, in the precure tread described in JP-A-H1-317807, an air hole leading from the rear surface groove to the front surface is provided, so that the effect of preventing peeling of the precure tread from the base tire, which is liable to occur in a retreaded tire, is enhanced. Also, there is proposed a precure tread and a retreaded tire using same in which a rear groove having a sufficient groove width in a width direction of the tire is provided to further improve the wet performance (refer to JP-A-H5-155202).

DISCLOSURE OF THE INVENTION

In the retreaded tires to which the precure treads disclosed in JP-AH1-317807 and JP-A-H5-155202 are attached, even when wear of the tread surface is progressed along with the traveling, thereby, to reduce the groove area of the front surface groove, the rear surface groove newly appears from the tread surface so that reduction of total groove volume can be compensated and the wet performance can be maintained over a long period of time. In addition, in the above-mentioned conventional retreaded tire, an air hole leading from the rear surface groove to the front surface is provided, so that the effect of preventing peeling of the precure tread from the base tire, which is liable to occur in a retreaded tire, is enhanced. However, the stiffness of the land portion near the opening of the rear surface groove is insufficient and excessive strain of the land portion near the opening of the rear surface groove is thus generated when the tire is rotated under a load, so that it is likely that the precure tread, especially near the opening of the rear surface groove, is peeled off from the base tire.

It is, therefore, an object of the present invention to provide a precure tread and a retreaded tire using same which precure tread is capable of enhancing the stiffness of the land portion and significantly reducing likelihood of peeling off from the base tire during traveling by optimizing the cross-section shape of the rear surface groove of the precure tread, while maintaining the wet performance from the beginning to the end of wear life.

In order to achieve the above-mentioned object, the present invention is a precure tread having a circumferential groove extending in a circumferential direction of a tire on a front surface which is to be a ground contact surface of the tire and a rear surface groove extending in the circumferential direction of the tire on a rear surface which is to be attached to a base tire, the rear surface groove appearing from a tread surface as wear of the tread surface is progressed, wherein, as viewed in a cross-section in a width direction of the tire, the rear surface groove has a generally trapezoidal shape, and a width of the rear surface groove is constant or tapered from a bottom to an opening of the groove
,wherein the ratio of the width of the rear surface groove at the opening to that at the bottom is within a range between 1:1 and 1:2;

and wherein the rear surface groove has a curved portion between the groove bottom and a groove wall, with curvature radius R being within the following range:

(the width of the rear surface groove at the bottom)/2 > R > 0.5 mm.

The term "curved portion" as used herein means a portion defining an apex of the generally trapezoidal shape. It is noted that the both grooves should be designed in such a manner that before the circumferential groove on the front surface disappears due to wear of the tread surface, the rear groove appears from the tread surface. Such a configuration makes it possible to provide a precure tread and a retreaded tire using same capable of enhancing the stiffness of the land portion and significantly reducing likelihood of peeling off from the base tire during traveling by optimizing the cross-section shape of the rear surface groove of the precure tread, while maintaining the wet performance from the beginning to the end of wear life. The term "generally trapezoidal shape" as used herein means not only a shape having a pair of parallel opposite sides but also a shape having an arcuate curved portion interposed between the groove bottom and the groove wall.

The width of the rear surface groove at the bottom is preferably within a range between 2.0 mm and 6.0 mm.

The width of the rear surface groove at the opening is preferably within a range between 1.0 mm and 6.0 mm.

An air hole leading from the rear surface groove to the front surface is preferably provided.

An area of the opening of the air hole is preferably within a range between 0.5 mm$^2$ and 3.0 mm$^2$.

It is preferable that at least one air hole is provided along the rear surface groove in every one-eighth of the entire circumference of the tire.

Furthermore, a retreaded tire of the present invention is characterized by using the precure tread having the above-mentioned features.

According to the present invention, it is possible to provide a precure tread and a retreaded tire using same capable of enhancing the stiffness of the land portion and significantly reducing likelihood of peeling off from the base tire during traveling by optimizing the cross-section shape of the rear surface groove of the precure tread, while maintaining the wet performance from the beginning to the end of wear life.

BRIEF DESCRIPTION OF THE DRAWINGS

[Fig. 1 ] Fig. 1 is a sectional view of a typical precure tread according to the present invention.
[Fig. 2] Fig. 2 is a sectional perspective view of a part of the precure tread shown in Fig. 1.
[Fig. 3] Fig. 3 is a graph showing a correlation between a cross-section shape and cross-section shear strain of the rear surface groove.
[Fig. 4] Fig. 4 is a plan view of a part of the precure tread shown in Fig. 1.
[Fig. 5] Fig. 5 is a sectional view in a width direction of a retreaded tire using the precure tread shown in Figs. 1, 2 and 4.
[Fig. 6] Fig. 6 is a graph showing a result of a drum test validating the correlation between the cross-section shape and the peeling occurrence of the rear surface groove.

REFERENCE SYMBOLS

1    precure tread
2    circumferential groove
3    base tire
4    rear surface groove
5    groove bottom
6    opening
7    groove wall
8    air hole
9    curved portion

BEST MODE FOR CARRYING OUT THE INVENTION

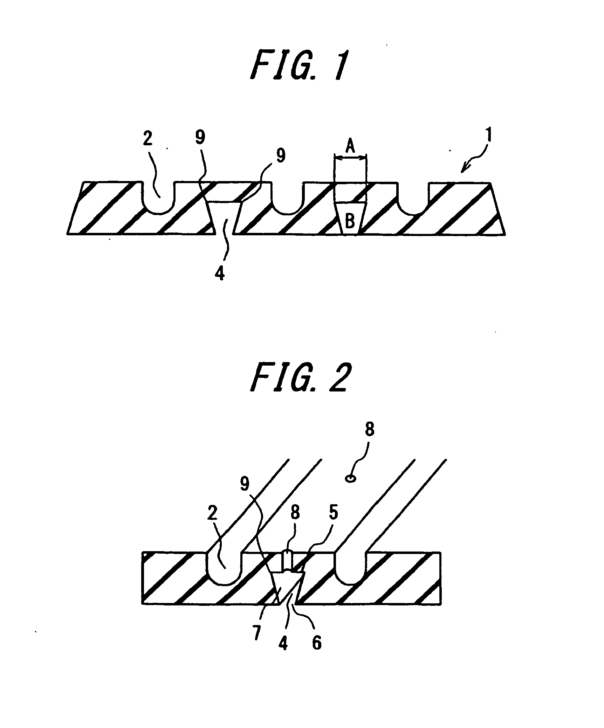

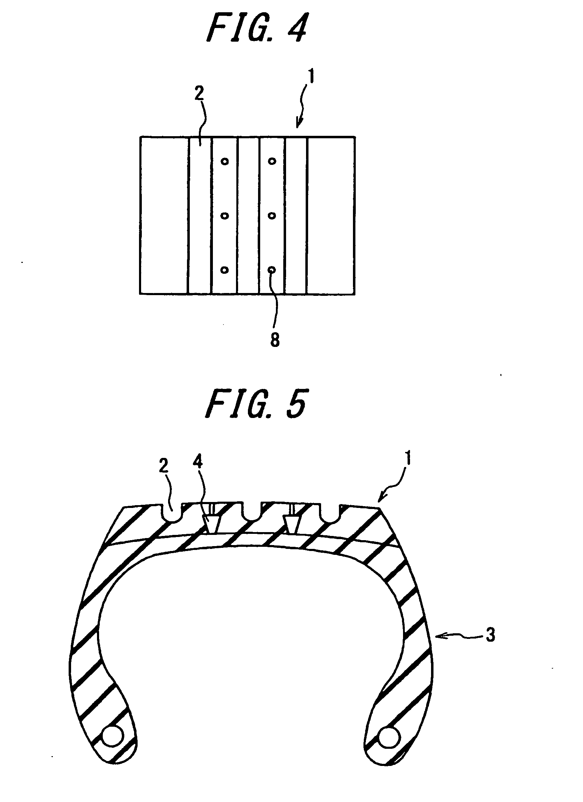

Hereinafter, embodiments of the present invention will be described with reference to the attached drawings. Fig. 1 is a sectional view of a typical precure tread according to the present invention. Fig. 2 is a sectional perspective view of a part of the precure tread shown in Fig. 1. Fig. 4 is a plan view of a part of the precure tread shown in Fig. 1.

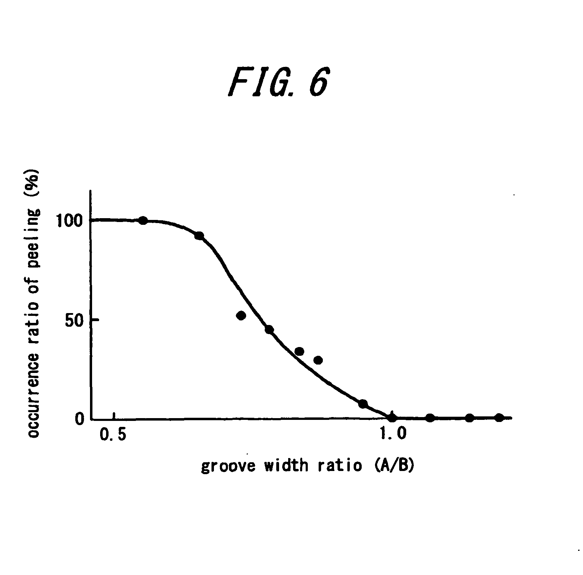

Fig. 6 is a graph showing a result of a drum test validating the correlation between the cross-section shape and the peeling occurrence of the rear surface groove.

A precure tread 1 shown in Figs. 1, 2 and 4 has circumferential grooves 2 extending in a circumferential direction of a tire on a front surface which is to be a ground contact surface of the tire and rear surface groove(s) 4 extending in the circumferential direction of the tire on a rear surface which is to be attached to a base tire 3, the rear surface groove appearing from a tread surface as wear of the tread surface is progressed. In order to maintain the wet performance from the beginning to the end of wear life of the tire, the circumferential groove 2 and the rear surface groove 4 should be designed in such a manner that the rear surface groove 4 appears from the tread surface before the circumferential groove 2 on the front surface has been completely worn out. The reason is that if the rear surface groove 4 has not appeared from the tread surface before wear of the tread portion is progressed and the circumferential groove 2 is completely worn out, the wet performance of the tire is significantly reduced until the rear surface groove 4 appears from the tread surface.

In addition, as shown in Figs. 1 and 2, as viewed in a cross-section in the width direction of the tire, the rear surface groove 4 has a generally trapezoidal shape, and a width of the rear surface groove 4 is constant or tapered from a bottom 5 to an opening 6 of the groove. In the base tire 3 to which the precure tread 1 provided with such rear surface groove 4 is attached, the shape of the rear surface groove makes it harder to generate cross-section shear due to strain, when the tire is rotated under a load, to reduce the likelihood that a crack is generated between the base tire 3 and the neighborhood of the opening 6 of the rear surface groove 4, and therefore to reduce the likelihood that the precure tread 1 is peeled off from the base tire 3.

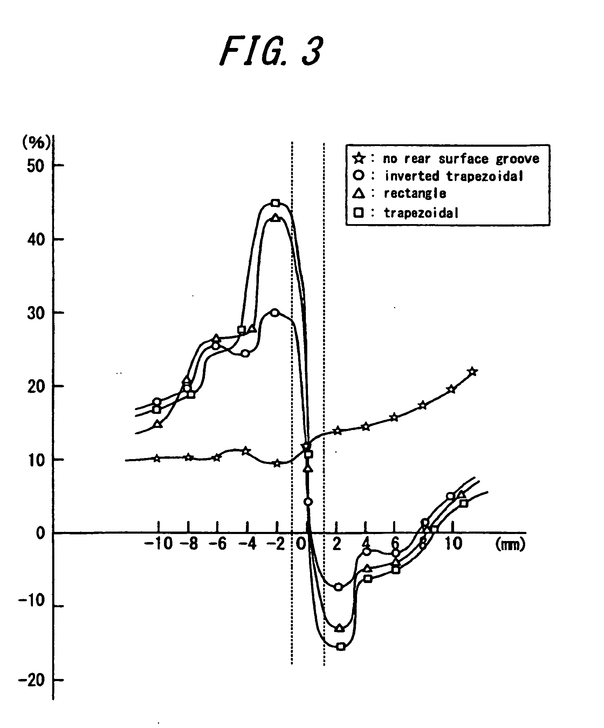

Fig. 3 shows a result of analyzing a correlation between the cross-section shape and shear strain of the rear surface groove 4 by means of the finite element method. The analysis by means of the finite element method is performed with using four kinds of retreaded tires respectively having the following precure tread:

a precure tread not having a rear surface groove;
a precure tread provided with the rear surface groove 4 having a generally trapezoidal cross-section shape and a width being constant from the bottom 5 to the opening 6 (hereinafter, referred to as a "rectangle rear surface groove");
a precure tread provided with the rear surface groove 4 having a generally trapezoidal cross-section shape and a width being tapered from the bottom 5 to the opening 6 (hereinafter, referred to as a "inverted trapezoidal rear surface groove"); and
a precure tread provided with the rear surface groove 4 having a generally trapezoidal cross-section shape and a width being tapered from the opening 6 to the bottom 5 (hereinafter, referred to as a "trapezoidal rear surface groove").

The transverse axis of the graph shown in Fig. 3 indicates a lateral position with the origin at the central position of the groove width at the opening 6 of the rear surface groove 4. The vertical axis indicates cross-section shear strain at each position. Positive value of the vertical axis means that tensile stress is applied while negative value means that compressive stress is applied. The area defined between the dotted lines which are parallel to the vertical axis corresponds to the opening 6 of the rear surface groove 4. It turns out from the result shown in Fig. 3 that the cross-section shear strain of the precure tread provided with the rear surface groove 4 is larger than that of the precure tread not provided with the rear surface groove 4. Furthermore, the cross-section shear strain of the retreaded tire using the precure tread provided with the trapezoidal rear surface groove 4 is smaller than that of the retreaded tire using the precure tread provided with the rectangle rear surface groove and, in turn, that of the retreaded tire using the precure tread provided with inverted trapezoidal surface groove.

In this way, the precure tread 1 of the present invention is capable of enhancing the stiffness of the land portion and significantly reducing likelihood of the precure tread peeling off from the base tire when the tire is rotated under a load, while maintaining the wet performance from the beginning to the end of wear life. Especially, when the groove width is largely tapered from the groove bottom 5 to the opening 6, in comparison to the case when the groove width is constant, cross-section shear due to strain is more hardly generated, so as to reduce the likelihood that a crack is generated between the base tire 3 and the neighborhood of the groove wall 7 of the rear surface groove 4 during the tire being rotated under a load, and therefore to further reduce the likelihood that the precure tread 1 is peeled off from the base tire 3.

The ratio of the width B of the rear surface groove at the opening 6 to the width A of the rear surface groove at the bottom 5 is within a range between 1:1 and 1 :2, and more preferably within a range between 1:1.1 and 1:1.5. When the ratio of the groove width B to A is larger than 1:2, i.e. the groove width A at the bottom is two times larger than the groove width B at the opening, the shape of the rear surface groove makes it harder to generate cross-section shear due to strain during the tire being rotated under a load, to further reduce the likelihood that a crack is generated between the base tire 3 and the neighborhood of the opening 6 of the rear surface groove 4, and therefore to further reduce the likelihood that the precure tread 1 is peeled off from the base tire 3. However, at the same time, the opening 6 is to be so narrow that when the rear surface groove is formed through vulcanization and pulled out of a mold, the rear surface groove 4 may be damaged. On the other hand, when the ratio of the groove width A to B is less than 1:1, i.e. the groove width B at the opening is larger than the groove width A at the bottom, the shape of the rear surface groove is more likely to generate cross-section shear due to strain during the tire being rotated under a load to further increase the likelihood that a crack is generated between the base tire 3 and the neighborhood of the opening 6 of the rear surface groove 4, and therefore to significantly increase the likelihood that the precure tread 1 is peeled off from the base tire 3.

The width A of the rear surface groove 4 at the bottom 5 is preferably within a range between 2.0 mm and 6.0 mm, and more preferably within a range between 2.0 mm and 4.0 mm. When the groove width A at the bottom 5 is less than 2.0 mm, the groove width is too small to ensure the sufficient water absorption effect and therefore the sufficient wet performance. On the other hand, when the groove width A at the bottom 5 is larger than 6.0 mm, although the water absorption effect is sufficiently ensured, the stiffness of the land portion is reduced so that the handling performance both on dry and wet road surfaces is reduced and excessive strain of the land portion is generated between the precure tread and the base tire during the tire being rotated under a load. As a result, it is likely that the precure tread 1 is peeled off from the base tire 3.

Moreover, the width B of the rear surface groove 4 at the opening 6 is preferably within a range between 1.0 mm and 6.0 mm and more preferably within a range between 1.5 mm and 4.0 mm. When the groove width B at the opening 6 is less than 1.0 mm, the area of the rear surface of the precure tread to which the base tire is attached, is increased so that the stiffness of the land portion is increased during the tire being rotated under a load, to further reduce the likelihood that a crack is generated between the base tire 3 and the neighborhood of the opening 6 of the rear surface groove 4, and therefore to further reduce the likelihood that the precure tread 1 is peeled off from the base tire 3. However, at the same time, the opening 6 is to be so narrow that when the rear surface groove is formed through vulcanization and pulled out of a mold, the rear surface groove 4 may be damaged. On the other hand, when the groove width B at the opening 6 is larger than 6.0 mm, the area to be attached is decreased and the stiffness of the land portion is reduced, so that excessive strain of the tread portion is generated during the tire being rotated under a load, to increase the likelihood that a crack is generated between the base tire 3 and the neighborhood of the groove wall 7 of the rear surface groove 4, and therefore to significantly increase the likelihood that the precure tread 1 is peeled off from the base tire 3.

An air hole 8 leading from the rear surface groove 4 to the front surface is preferably provided. The reason is that in a vulcanizing process at high temperature at high pressure in the course of attaching a precure tread to a base tire, even if a green rubber increases its fluidity and will flow into the rear surface groove 4, the rear surface groove 4 is pressurized by the air hole 8 leading to the ground contact surface of the tire, which prevents the rubber from flowing into the rear surface groove 4. Therefore, the retreaded tire using the precure tread 1 of the present invention has the rear surface groove 4 having a sufficient depth and is capable of maintaining the wet performance from the beginning to the end of wear life.

In this case, an area of the opening of the air hole 8 is preferably within a range between 0.5 mm$^2$ and 3.0 mm$^2$. When the area of the opening of the air hole 8 is smaller than 0.5 mm$^2$, pressure though the air hole from outside does not function sufficiently so that the rubber may not be prevented from flowing into the rear surface groove 4. On the other hand, when the area of the opening of the air hole 8 is larger than 3.0 mm$^2$, pressure though the air hole from outside does function sufficiently to prevent the rubber from flowing into the rear surface groove 4. However, since the stiffness of the land portion is reduced, excessive strain is generated in the tread portion during the tire being rotated under a load, to increase the likelihood that a crack is generated between the base tire 3 and the neighborhood of the groove wall 7 of the rear surface groove 4, and therefore to increase the likelihood that the precure tread 1 is peeled off from the base tire 3.

It is preferable that at least one air hole 8 is provided along the rear surface groove 4 in every one-eighth of the entire circumference of the tire. When an air holes 8 is less densely provided, pressure though the air hole from outside does not function sufficiently in the rear surface groove and is not capable of preventing the rubber from flowing into the rear surface groove 4. In addition, strain is repeatedly generated near the rear surface groove during traveling to generate heat so that pressure in the rear surface groove is increased, however, since the air hole is insufficient so that pressure may not be reduced sufficiently and the precure tread 1 may be peeled off from the base tire 3. It is noted that, although Fig. 2 shows an embodiment of the air hole having a circular cross-section shape in the width direction, the shape is not limited to circular shape but may be an ellipse or noncircular shape.

The rear surface groove has a curved portion 9 between the groove bottom and a groove wall, with curvature radius R being within the following range:

$$\text{(the width A of the rear surface groove at the bottom)}/2 > R > 0.5 \text{ mm.}$$

When the curvature radius R is less than 0.5 mm, there is a higher risk that a crack due to strain is generated in the curved portion 9 to significantly increase the likelihood that the precure tread 1 is peeled off from the base tire 3. On the other hand, when the curvature radius R is larger than A/2, the groove width of the rear surface groove in the width direction of the tire is narrow at the beginning of wear life and there is a likelihood of temporarily reducing the wet performance.

Fig. 5 is a sectional view in a width direction of a retreaded tire using the precure tread.

The above description shows only a part of possible embodiments of the present invention. These configurations can be mutually combined and various modifications can be made without departing from the scope of the present invention.

EXAMPLES

Precure treads provided with three circumferential grooves having a groove width of 13.0 mm and two rear surface grooves having a groove width of 4.0 mm at the bottom, with the ratio of the width of the rear surface groove at the opening to that at the bottom being constant or inconstant are attached to base tires to form retreaded tires having a tire size of 12R22.5. Three tires per each groove width ratio are prepared. Each of the above-mentioned experimental tires is mounted on a rim with a size of 8.25 to form a tire/rim assembly, to which air pressure of 700 kPa (relative pressure) is applied. Each of the tire/rim assemblies is subjected to a test of the traveling distance of 20,000 km on a drum test equipment under the condition of the tire load of 2500 kN and the traveling velocity of 60 km/h. Visual inspection is conducted with each tire after traveling to confirm the presence of peeling of the precure tread and to obtain the occurrence ratio of the peeling for each groove width ratio. The results are shown in Fig. 6.

It turns out from the evaluation results shown in Fig. 6 that the rear surface groove having the width being constant or tapered from the bottom to the opening of the groove can effectively prevent the precure tread of the retreaded tire from being peeled off from the base tire.

INDUSTRIAL APPLICABILITY

As is apparent from the above invention, it is possible to provide a precure tread and a retreaded tire using same capable of enhancing the stiffness of the land portion and significantly reducing likelihood of peeling off from the base tire during traveling by optimizing the cross-section shape of the rear surface groove of the precure tread, while maintaining the wet performance from the beginning to the end of wear life.

**Claims**

1. A precure tread (1) having a circumferential groove (2) extending in a circumferential direction of a tire on a front surface which is to be a ground contact surface of the tire and a rear surface groove (4) extending in the circumferential direction of the tire on a rear surface which is to be attached to a base tire (3), the rear surface groove (4) appearing from a tread surface as wear of the tread surface is progressed, wherein, as viewed in a cross-section in a width direction of the tire, the rear surface groove (4) has a generally trapezoidal shape, and a width of the rear surface groove (4) is constant or tapered from a bottom (5) to an opening of the groove (6), wherein
the ratio of the width of the rear surface groove (4) at the opening (6) to that at the bottom (5) is within a range between 1:1 and 1:2; **characterised in that**
the rear surface groove (4) has a curved portion (9) between the groove bottom (5) and a groove wall (7), with curvature radius R being within the following range:

$$\text{(the width of the rear surface groove at the bottom)}/2 > R > 0.5 \text{ mm.}$$

2. The precure tread (1) according to claim 1, wherein the width of the rear surface groove (4) at the bottom is within a range between 2.0 mm and 6.0 mm.

3. The precure tread (1) according to claim 1 or 2, wherein the width of the rear surface groove (4) at the opening is within a range between 1.0 mm and 6.0 mm.

4. The precure tread (1) according to any one of claims 1 to 3, wherein an air hole (8) leading from the rear surface groove (4) to the front surface is provided.

5. The precure tread (1) according to claim 4, wherein an area of the opening of the air hole (8) is within a range

between 0.5 mm$^2$ and 3.0 mm$^2$.

**6.** The precure tread (1) according to claim 4 or 5, wherein at least one air hole (8) is provided along the rear surface groove (4) in every one-eighth of the entire circumference of the tire.

**7.** A retreaded tire **characterized by** using the precure tread (1) according to any one of claims 1 to 6.

**Patentansprüche**

**1.** Vorgehärtetes Reifenprofil (1) mit einer Umfangsrille (2), die sich in einer Umfangsrichtung eines Reifens auf einer Vorderfläche erstreckt, die eine Bodenkontaktfläche sein soll, und einer hinteren Oberflächenrille (4), die sich in der Umfangsrichtung des Reifens auf einer hinteren Oberfläche erstreckt, die an einem Basisreifen (3) befestigt werden soll, wobei die hintere Oberflächenrille (4) von einer Lauffläche erscheint, während die Abnutzung der Lauffläche fortschreitet, wobei, wenn man im Querschnitt in einer Breitenrichtung des Reifens betrachtet, die hintere Oberflächenrille (4) eine im Allgemeinen trapezförmige Form aufweist, und wobei eine Breite der hinteren Oberflächenrille (4) konstant ist oder vom Boden (5) zu einer Öffnung (6) der Rille kegelförmig verläuft, wobei das Verhältnis der Breite der hinteren Oberflächenrille (4) an der Öffnung (6) zu der am Boden (5) innerhalb eines Bereiches zwischen 1:1 und 1:2 beträgt; **dadurch gekennzeichnet, dass** die hintere Oberflächenrille (4) einen gebogenen Abschnitt (9) zwischen dem Rillenboden (5) und einer Rillenwand (7) aufweist, wobei der Krümmungsradius R innerhalb des folgenden Bereiches liegt:

$$\text{(Breite der hinteren Oberflächenrille am Boden)}/2 > R > 0{,}5 \text{ mm.}$$

**2.** Vorgehärtetes Reifenprofil (1) nach Anspruch 1, bei dem die Breite der hinteren Oberflächenrille (4) am Boden innerhalb eines Bereiches von zwischen 2,0 mm und 6,0 mm liegt.

**3.** Vorgehärtetes Reifenprofil (1) nach Anspruch 1 oder 2, bei dem die Breite der hinteren Oberflächenrille (4) in der Öffnung innerhalb eines Bereiches von zwischen 1,0 mm und 6,0 mm liegt.

**4.** Vorgehärtetes Reifenprofil (1) nach einem der Ansprüche 1 bis 3, bei dem ein Luftloch (8) vorhanden ist, das von der hinteren Oberflächenrille (4) zur Vorderfläche führt.

**5.** Vorgehärtetes Reifenprofil (1) nach Anspruch 4, bei dem eine Fläche der Öffnung des Luftloches (8) innerhalb eines Bereiches von zwischen 0,5 mm$^2$ und 3,0 mm$^2$ liegt.

**6.** Vorgehärtetes Reifenprofil (1) nach Anspruch 4 oder 5, bei dem mindestens ein Luftloch (8) längs der hinteren Oberflächenrille (4) aller 1/8 des gesamten Umfanges des Reifens vorhanden ist.

**7.** Runderneuerter Reifen, **dadurch gekennzeichnet, dass** das vorgehärtete Reifenprofil (1) nach einem der Ansprüche 1 bis 6 zum Einsatz kommt.

**Revendications**

**1.** Bande de roulement précuite (1), comportant une rainure circonférentielle (2) s'étendant dans une direction circonférentielle d'un bandage pneumatique sur une surface avant, destinée à constituer une surface de contact au sol du bandage pneumatique, et une rainure de surface arrière (4), s'étendant dans la direction circonférentielle du bandage pneumatique, sur une surface arrière destinée à être fixée sur un bandage pneumatique de base (3), la rainure de la surface arrière (4) apparaissant à partir d'une surface de la bande de roulement lors de la progression de l'usure de la surface de la bande de roulement, dans laquelle, vue en section transversale, dans une direction de la largeur du bandage pneumatique, la rainure de la surface arrière (4) a une forme généralement trapézoïdale, une largeur de la rainure de la surface arrière (4) étant constante ou effilée d'un fond (5) vers une ouverture de la rainure (6), dans laquelle le rapport entre la largeur de la rainure de la surface arrière (4) au niveau de l'ouverture (6) et celle au niveau du fond (5) est compris dans un intervalle allant de 1 :1 à 1 :2 ; **caractérisée en ce que**

la rainure de la surface arrière (4) comporte une partie courbée (9) entre le fond de la rainure (5) et une paroi de la rainure (7), le rayon de courbure R étant compris dans l'intervalle ci-dessous :

(la largeur de la rainure de la surface arrière au niveau du fond/2 > R > 0,5 mm.

**2.** Bande de roulement précuite (1) selon la revendication 1, dans laquelle la largeur de la rainure de la surface arrière (4) au niveau du fond est comprise dans un intervalle allant de 2,0 mm à 6,0 mm.

**3.** Bande de roulement précuite (1) selon les revendications 1 ou 2, dans laquelle la largeur de la rainure de la surface arrière (4) au niveau de l'ouverture est comprise dans un intervalle allant de 1,0 mm à 6,0 mm.

**4.** Bande de roulement précuite (1) selon l'une quelconque des revendications 1 à 3, dans laquelle est formé un trou d'air (8) menant de la rainure de la surface arrière (4) vers la surface avant.

**5.** Bande de roulement précuite (1) selon la revendication 4, dans laquelle une surface de l'ouverture du trou d'air (8) est comprise dans un intervalle allant de 0,5 mm$^2$ à 3,0 mm$^2$.

**6.** Bande de roulement précuite (1) selon les revendications 4 ou 5, dans laquelle au moins un trou d'air (8) est formé le long de la rainure de la surface arrière (4), sur chaque huitième de l'ensemble de la circonférence du bandage pneumatique.

**7.** Bandage pneumatique rechapé, **caractérisé par** l'utilisation de la bande de roulement précuite (1) selon l'une quelconque des revendications 1 à 6.

# FIG. 1

# FIG. 2

# FIG. 3

# FIG. 4

# FIG. 5

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10119054 A
- JP H1317807 A
- JP H5155202 A